# EUROPÄISCHE PATENTSCHRIFT

(11) **EP 0 508 103 B1**
(45) Veröffentlichungstag und Bekanntmachung des Hinweises auf die Patenterteilung: **18.01.1995**
(21) Anmeldenummer: 92103731.3
(22) Anmeldetag: 05.03.1992
(51) Int. Cl.: B23B 51/00

(54) **Bohrvorrichtung zum Herstellen von Bohrungen mit Hinterschneidungen**
Drilling device for making holes with undercuttings
Dispositif de forage pour l'usinage des trous à chambrage

(30) Priorität: 10.04.1991 DE 9104326 U
(43) Veröffentlichungstag der Anmeldung: 14.10.1992
(73) Patentinhaber: Eischeid, Karl, 51766 Engelskirchen (DE)
(72) Erfinder: Eischeid, Karl, 51766 Engelskirchen (DE)
(74) Vertreter: Eichler, Peter, Dipl.-Ing.

(56) Entgegenhaltungen:
- GB-A- 518 688
- US-A- 2 818 753

## Beschreibung

Die Erfindung bezieht sich auf eine Bohrvorrichtung zum Herstellen von Bohrungen mit Hinterschneidungen, mit einem Bohrer, dessen Bohrschaft eine über den Bohrschaftumfang radial vorstehende Seitenschneide und auf seinem der Seitenschneide gegenüberliegenden Umfang eine das Einstecken der Seitenschneide in die Bohrung ermöglichende Abflachung aufweist, und dessen Bohrschaft mit einer beim Rotieren des Bohrers taumelnde Schaftbewegungen gestattenden gelenkigen, zwischen dem Bohrer und einem Bohrerantrieb angeordneten Verbindungskupplung fest verbunden ist, die ein bohrantriebsseitiges Kupplungsstück mit einem beim Herstellen der Hinterschneidung axial beweglichen, mit einem Griffstück oder einer maschinellen Verstellung versehenen Druckkörper aufweist, der auf einer einen radialen Vortrieb der Seitenschneide bewirkenden Schrägfläche eines mit dem Bohrschaft verbundenen Kupplungsstücks abstützbar ist, vgl. den Oberbegriff der unabhängigen Ansprüche 1 und 2.

Eine Bohrvorrichtung mit den vorstehenden Merkmalen ist aus der DE 38 42 683 A1 bekannt. Bei der bekannten Vorrichtung sind der Bohrschaft mit der Seitenschneide und das bohrschaftseitige Kupplungsstück der Verbindungskupplung exzentrisch zur Rotationsachse angeordnet, die durch das bohrantriebsseitige Kupplungsstück bestimmt ist. Der Bohrschaft bzw. das an ihm befestigte bohrschaftseitige Kupplungsstück ist derart mit außerhalb der Rotationsachse liegendem Masseschwerpunkt ausgebildet, daß sich dieses Kupplungsstück mit dem daran befindlichen Bohrer im Bohrantriebsfall durch Fliehkraftwirkung stets so ausrichtet, daß die Seitenschneide in einer Stellung ist, in der der Bohrschaft ohne radiale Auslenkung der Seitenschneide in eine zylindrische Vorbohrung eingeführt werden kann. Am oberen Ende des bohrschaftseitigen Kupplungsstücks ist die Schrägfläche als Konusmantelfläche mit zum Bohrantrieb weisender Verjüngung angeordnet. Dieser Schrägfläche benachbart ist der Druckkörper angeordnet und weist an dem benachbarten Körperende eine entsprechend zum Bohrantrieb verjüngte konische Ausnehmung auf, mit der der Druckkörper auf die Schrägfläche des bohrschaftseitigen Kupplungsstücks aufgeschoben werden kann, wenn der Druckkörper vertikal in Richtung auf den Bohrer bewegt wird. Hierdurch ist es bei drehangetriebenem Bohrer möglich, das bohrschaftseitige Kupplungsstück entgegen der auf dieses einwirkenden Fliehkraft um seine Querachse, mit der es an dem bohrantriebsseitigen Kupplungsstück in einer Ebene schwenkbar verbunden ist, so zu verstellen, daß die Schrägfläche druckbeaufschlagt und ein radialer Vortrieb der Seitenschneide erreicht wird. Der Hinterschneidungsvorgang erfolgt also derart, daß der Bohrer durch den Bohrerantrieb in Rotation versetzt wird und sich infolgedessen wie vorbeschrieben ausrichtet. Die Seitenschneide und der Bohrschaft werden in die Vorbohrung eingeführt, wonach eine Beaufschlagung des bohrschaftseitigen Kupplungsstücks mit dem Druckkörper erfolgt, so daß die Seitenschneide radial vorgetrieben wird. Wenn der Druckkörper entgegen der durch den Hinterschneidungsvorgang entstehenden Reaktionskraft weit genug auf das bohrschaftseitige Kupplungsstück aufgeschoben ist, kann der Druckkörper losgelassen werden. Danach richtet sich das bohrschaftseitige Kupplungsstück zusammen mit dem Bohrer wieder so aus, daß die Seitenschneide von der Hinterschneidung freikommt und der Bohrer aus der fertiggestellten Hinterschneidungsbohrung herausgezogen werden kann. Es hat sich jedoch erwiesen, daß die Selbstausrichtung des Bohrers nicht in allen Anwendungsfällen genügt. Wenn beispielsweise die Entfernung des Bohrmehls aus der Bohrung nicht ausreichend ist, oder wenn der Bohrantrieb ausfällt, kommt die Selbstausrichtung nicht oder nicht ausreichend zustande. Dann kann der Bohrer nicht oder nur unter Behinderung durch Bohrmehl bzw. durch die Hinterschneidung herausgezogen werden. Wenn der Bohrer außer zur Herstellung der Hinterschneidung auch dazu benutzt wird, die Vorbohrung bzw. das Bohrloch herzustellen, kann es infolge von Inhomogenitäten des Werkstoffs und/oder von Verkantungsbewegungen der Antriebsmaschine od.dgl. dazu kommen, daß die Fliehkraftwirkung und damit die Ausrichtung des Bohrers beeinträchtigt werden bzw. nicht ausreichen.

Aus der US-A-2 818 753 ist eine Bohrvorrichtung zum Herstellen von Bohrungen mit Hinterschneidungen bekannt, mit einem Bohrer, dessen Bohrschaft mit einer beim Rotieren des Bohrers taumelnde Schaftbewegungen gestattenden gelenkigen, zwischen dem Bohrer und einem Bohrerantrieb angeordneten Verbindungskupplung fest verbunden ist, die ein bohrantriebsseitiges Kupplungsstück mit einem Druckkörper aufweist, der auf einer einen radialen Vortrieb der Seitenschneide bewirkenden Schrägfläche eines mit dem Bohrschaft verbundenen Kupplungsstücks abstützbar ist, wobei der Druckkörper das bohrschaftseitige Kupplungsstück in einer axial nicht beaufschlagten Stellung axial überlappt und mit diesem Kupplungsstück radial formschlüssig gekuppelt ist. Der bekannte Druckkörper wird beim Herstellen der Hinterschneidung axial festgehalten, da die Seitenschneide zugleich radial und axial bewegt werden muß, um die Hinterschneidung herstellen zu können. Die radial formschlüssige Kupplung zwischen dem Druckkörper und dem Kupplungsstück erfolgt durch punktförmige Anlage zweier Einstellschrauben an Schmalkanten des plattenartig ausgebildeten Bohrers. Diese Vorrichtung ist einstellungs- und toleranzsensibel.

Der Erfindung liegt die Aufgabe zugrunde, eine Bohrvorrichtung mit den eingangs genannten Merkmalen so zu verbessern, daß der Bohrer beim Herstellen der Vorbohrung im Werkstück durch axialen Vorschub des Bohrers gegen Radialbewegungen zwangsgeführt werden bzw. aus der fertiggestellten Hinterschneidungsbohrung auch dann herausgezogen werden kann, wenn eine durch Fliehkraft erfolgende Selbstausrichtung des bohrschaftseitigen Kupplungsstücks nicht oder nicht ausreichend möglich ist und daß die Radialführung zum Herstellen der Hinterschneidungen einfach ausgebildet und genau herzustellen sind.

Diese Aufgabe wird erfindungsgemäß durch die kennzeichnenden Merkmale der unabhängigen Ansprüche 1 und 2 gelöst.

Für die Erfindung ist von Bedeutung, daß die Bohrvorrichtung im Sinne einer Zwangsführung des bohrschaftseitigen Kupplungsstücks bzw. des Bohrers ausgebildet ist. Hierzu dient die bei der Vorrichtung der DE 38 42 683 A1 nicht gegebene axiale Überlappung im Fall der axial nicht beaufschlagten Stellung des Druckkörpers sowie dessen radial formschlüssige Kupplung mit dem bohrschaftseitigen Kupplungsstück. Jeder Axialbewegung des Druckkörpers entspricht mithin eine Radialbewegung des bohrschaftseitigen Kupplungsstücks und damit der Seitenschneide. Der Druckkörper kann dabei auch dafür eingesetzt werden, den Bohrschaft in der Vorbohrung radial hin- und herzubewegen, um beispielsweise die Bohrmehlentfernung zu erleichtern. Der Anwendungsbereich der Bohrvorrichtung wird dadurch vergrößert, und zwar einmal im rauhen Betrieb, wenn beispielsweise großer Bohrmehlanfall vorliegt, bzw. im Feinbetrieb, wenn eine feinfühlige Radialsteuerung erforderlich ist. Von besonderem Vorteil ist die mögliche vollständige Axialentlastung des Bohrers durch die radiale Zwangssteuerung des bohrschaftseitigen Kupplungsstücks.

Die einander parallelen Flächen sind hochgenau einfach herzustellen, und zwar sowohl am bohrschaftseitigen Kupplungsstück, als auch am Druckkörper. Darüber hinaus ergibt sich eine verdrehfeste Verbindung zwischen dem Kupplungsstück und dem Druckkörper trotz deren Axialverschieblichkeit. Die Ausführungsform zeichnet sich insbesondere durch die Möglichkeit zur Übertragung hoher Drehantriebskräfte aus.

Eine weitere vereinfachte Herstellbarkeit liegt vor, wenn die Vorrichtung so ausgebildet ist, daß der axial bewegliche Druckkörper eine kreiszylindrische Führungsausnehmung hat und das bohrschaftseitige Kupplungsstück ein zum Bohrer hin konisch verjüngtes Ende mit einer der kreiszylindrischen Führungsausnehmung des Druckkörpers angepaßten Schrägfläche aufweist. Die kreiszylindrische Führungsausnehmung kann durch einen einfachen Bohrungsvorgang präzise hergestellt werden und das bohrschaftseitige Kupplungsstück, das im wesentlichen rotationssymmetrisch ausgebildet ist, kann ebenfalls mit geringem Herstellungsaufwand angefertigt werden. Die vorgenannte Vorrichtung kann trotz ihre kreisförmigen Querschnitte zweckmäßigerweise so ausgestaltet werden, daß daß der Druckkörper mit dem bohrantriebsseitigen Kupplungsstück verdrehformschlüssig verbunden ist. Die verdrehformschlüssige Verbindung zwischen dem Druckkörper und dem bohrantriebsseitigen Kupplungsstück kann den Anforderungen entsprechend ausgebildet werden, also beispielsweise an einer dafür besonders geeigneten Stelle mit besonders geeigneten Mitteln. Der Eingriffsbereich zwischen dem bohrschaftseitigen Kupplungsstück und dem Druckkörper wird von Aufgaben zur Übertragung von Drehantriebskräften völlig entlastet, was für eine leichte Radialverstellbarkeit von Vorteil sein kann.

Eine konstruktive einfache Ausbildung der Bohrvorrichtung ergibt sich, wenn die Kupplungsstücke über eine Querachse miteinander verbunden sind, und daß der Druckkörper das bohrschaftseitige Kupplungsstück auf Höhe der Schrägfläche mit einer Führungsausnehmung formschlüssig umfaßt. Durch die vorbeschriebene Verbindung der Kupplungsstücke miteinander liegt Schwenkbarkeit nur in einer einzigen Ebene vor. Infolgedessen kann der radial formschlüssige Zusammenbau zwischen dem Druckkörper und dem benachbarten Ende des bohrschaftseitigen Kupplungsstücks auf nur diese in einer einzigen Ebene erfolgende Schwenkmöglichkeit abgestimmt werden. Dadurch vereinfacht sich auch die Herstellbarkeit der Führungsausnehmung bzw. der druckkörperseitigen Ausbildung des bohrschaftseitigen Kupplungsstücks.

Die Erfindung wird anhand von in der Zeichnung dargestellten Ausführungsbeispielen erläutert. Es zeigt:
- Fig.1: eine teilweise geschnittene Seitenansicht einer erfindungsgemäßen Bohrvorrichtung,
- Fig.1a: den Schnitt A-A der Fig.1,
- Fig.2: eine der Fig.1 ähnliche Darstellung bei radial beaufschlagter Seitenschneide der Bohrvorrichtung der Fig.1,
- Fig.3,3a und 4: den Fig.1,1a und 2 entsprechende Darstellungen bei abgeänderter Ausbildung des Eingriffsbereichs zwischen Druckkörper und bohrschaftseitigem Kupplungsstück, und
- Fig.3b: die Ansicht B der Fig.4.

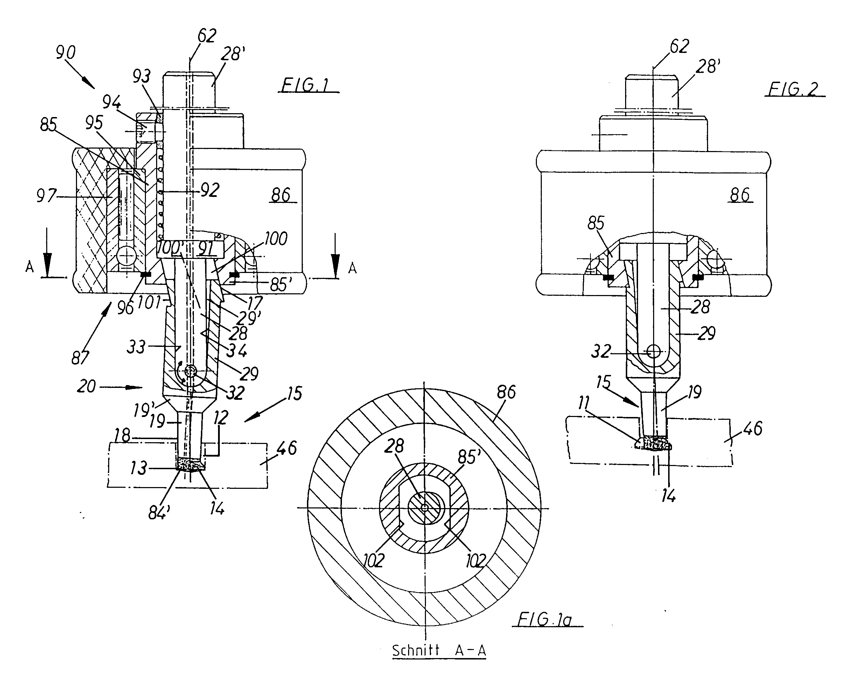

Die in Fig.1 dargestellte Bohrvorrichtung 90 wird bezüglich des Werkstücks 46 angewendet, indem zuvor eine Vorbohrung 12 hergestellt wurde, die den ersichtlichen Bohrungslängsschnitt hat. Die Vorbohrung 12 wird entweder mit einem von dem Bohrer 15 der Figuren separaten Vorbohrer hergestellt, oder es wird zu ihrer Herstellung der Bohrer 15 selbst benutzt, der dazu wie die Seitenschneide ausgerüstet ist oder eine andere, schneidende Bohrspitze besitzt. Nach der Herstellung der Vorbohrung 12 wird die aus Fig.2 ersichtliche Hinterschneidung 11 mit dem Bohrer 15 hergestellt, der einen Bohrschaft 19 hat, an dessen werkstückseitiger Spitze eine Seitenschneide 14 angeordnet ist. Die Seitenschneide 14 springt radial von der Rotationsachse 62 der Bohrvorrichtung 90 vor. Sie ist mit einem Schneidpulver 84' versehen oder in herkömmlicher Weise mit einem seitlich wirksamen Hartmetallplättchen ausgerüstet. Der Bohrschaft 19 hat einen abgeflachten Aussenumfang 18, dessen Abflachung sich praktisch über die gesamte Länge des Bohrschafts erstreckt und so bemessen ist, daß der Bohrschaft 19 trotz des Vorhandenseins der Seitenschneide 14 problemlos in das Bohrloch hineingesteckt werden kann. Die Abflachung 18 ist dabei beispielsweise mit einem Winkel von 4,7° geneigt, und erstreckt sich gleichmäßig zwischen der Spitze 13 des Bohrschafts 19 bis zu dessen Bohrschaftende 19'. Im Bereich der Spitze 13 ergibt sich dabei ein Durchmesser über die Seitenschneide 14 gemessen, der etwas kleiner als der Durchmesser der Vorbohrung 12 ist. Ungeachtet der sich über die Länge des Bohrschafts 19 erstreckenden Abflachung 18, hat der Bohrschaft 19 im Bereich dieser Abflachung über seine gesamte Länge etwa den Radius des Bohrlochs 12, wobei lediglich der Radiusmittelpunkt zunehmend exzentrisch von der Rotationsachse 62 angeordnet ist. Ein Querschnitt des Bohrschafts 19 oberhalb der Seitenschneide 14 ergäbe ein Zweieck, welches bezüglich der Längsachse durch die zwei Ecken symmetrisch wäre, wenn auch der dem Außenumfang 18 gegenüberliegende, nämlich der oberhalb der Seitenschneide 14 befindliche Außenumfang in gleicher Weise abgeflacht wäre.

Zwischen dem Bohrer 15 und einem nicht dargestellten Bohrerantrieb, beispielsweise einer elektromotorisch angetriebenen Bohrmaschine, ist eine Verbindungskupplung 20 vorhanden, die im wesentlichen aus einem bohrschaftseitigen Kupplungsstück 29 und einem bohrerantriebsseitigen Kupplungsstück 28 besteht. Die beiden Teile 28,29 sind durch eine Querachse 32 miteinander verbunden. Durch diese Achse 32 wird festgelegt, daß sich das Kupplungsstück 28 und der Bohrschaft 19 lediglich in den durch den Doppelpfeil bestimmten Richtungen der Darstellungsebene relativ zueinander bewegen können. Diese Richtungen bestimmen die Bewegungsrichtungen der Seitenschneide 14. Die maximale Schwenkamplitude des patritzenförmigen Kupplungsstücks 28 in Bezug auf das matritzenförmige Kupplungsstück 29 bzw. umgekehrt, wird durch die Ausnehmung 29' des Kupplungsstücks 29 bestimmt. Letzteres hat einen Wandabschnitt 33 als Bohranschlag sowie einen diesem gegenüberliegenden Wandabschnitt 34 als Hinterschnittanschlag, die als Schwenkanschläge fungieren. Diese Wandabschnitte sind derart ausgebildet, daß sie die durch Vergleich zwischen den Fig.1,2 ersichtliche relative Schwenkbarkeit zwischen den Kupplungsstücken 28,29 ermöglichen.

Das Kupplungsstück 28 der Verbindungskupplung 20 ist mit einem Antriebsanschluß 28' versehen, der als Einspannzapfen ausgebildet ist. Der Antriebsanschluß 28' besitzt einen Ringkragen 91, auf dem sich eine Druckfeder 92 mit ihrem einen Ende abstützt, während ihr anderes Ende an einem den Antriebsanschluß 28' umgebenden Gleitring 93 abgestützt ist, der auf dem Antriebsanschluß axial verschieblich sitzt. Die Druckfeder 92 ist von einem Druckkörper 85 umgeben, der als Hülse ausgebildet ist. Am oberen Ende des Druckkörpers 85 ist eine mit einem Innenmehrkant versehene Befestigungsschraube 94 quer verstellbar vorhanden, die in eine nicht bezeichneten Ausnehmung des Gleitrings 93 eingreift. Der Druckkörper 85 hat auf seinem Außenumfang ein Wälzlager 87, dessen Innenring 95 an einer Schulter des Druckkörpers 85 anliegt und in dieser Stellung mit einem Sicherungsring 96 gehalten ist. Der Außenring 97 des Wälzlagers 87 ist mit einem Griffstück 86 fest verbunden, das gegenüber dem Druckkörper 85 drehbeweglich, aber axial unverstellbar ist.

Der Druckkörper 85 ist mit dem bohrschaftseitigen Kupplungsstück 29 über eine Führungsausnehmung 100 verdrehformschlüssig verbunden. Die Führungsausnehmung 100 hat eine Ausnehmungsachse 100', die mit der Rotationsachse 62 einen spitzen Winkel einschließt. Die Führungsausnehmung 100 des bohrerseitigen Endes 85' des Druckkörpers 85 hat zwei insbesondere aus Fig.1a ersichtliche Führungsflächen 102, die eben und etwa im Winkel der Führungsausnehmung 100 geneigt sind. Von ihnen hat die in den Darstellungen linke Führungsfläche 102 einen etwas größeren Winkel, als die gegenüberliegende Führungsfläche, um die Winkelverstellung des Kupplungsstücks 29 beim Übergang aus der in Fig.1 abgebildeten Stellung in die in Fig. 2 abgebildete Stellung zu berücksichtigen. Den Führungsflächen 102 entsprechen eine Schrägfläche 17 und eine letzterer parallele ebene Parallelfläche 101, die mit den Führungsflächen 102 zusammenwirken. Wenn das Griffstück 86 manuell vertikal nach unten geführt wird, ergibt sich eine Druckbeaufschlagung der Schrägfläche 17, was zu einer Schwenkbewegung des bohrschaftseitigen Kupplungsstücks 29 im Gegenuhrzeigersinn führt. Die Schwenkbewegung wird ausgeführt, bis der Wandabschnitt 34 an dem bohrantriebsseitigen Kupplungsstück 28 anliegt. Die Kupplungsstücke 28,29 haben dann eine Relativlage zueinander, die aus Fig.2 ersichtlich ist. Das Kupplungsstück 29 ist also soweit wie möglich in den Druckkörper 85 eingetaucht und die Seitenschneide 14 ist dabei soweit wie möglich radial nach außen vorgetrieben worden, so daß sich im Werkstück 46 die Hinterschneidung 11 ergeben hat.

Nach dem Herstellen der Hinterschneidung 11 wird das Griffstück 86 losgelassen, so daß sich das Druckstück 85 unter der Wirkung der Druckfeder 92 nach oben bewegen kann. Infolgedessen wird das Kupplungsstück 29 im Uhrzeigersinn zurückgeschwenkt und nimmt wieder die in Fig.1 dargestellte Lage ein. Sollte die Kraft der Feder 22 nicht ausreichen, kann das Druckstück 85 manuell nach oben geführt werden. Danach kann der Bohrer 15 aus der fertiggestellten Bohrung herausgezogen werden.

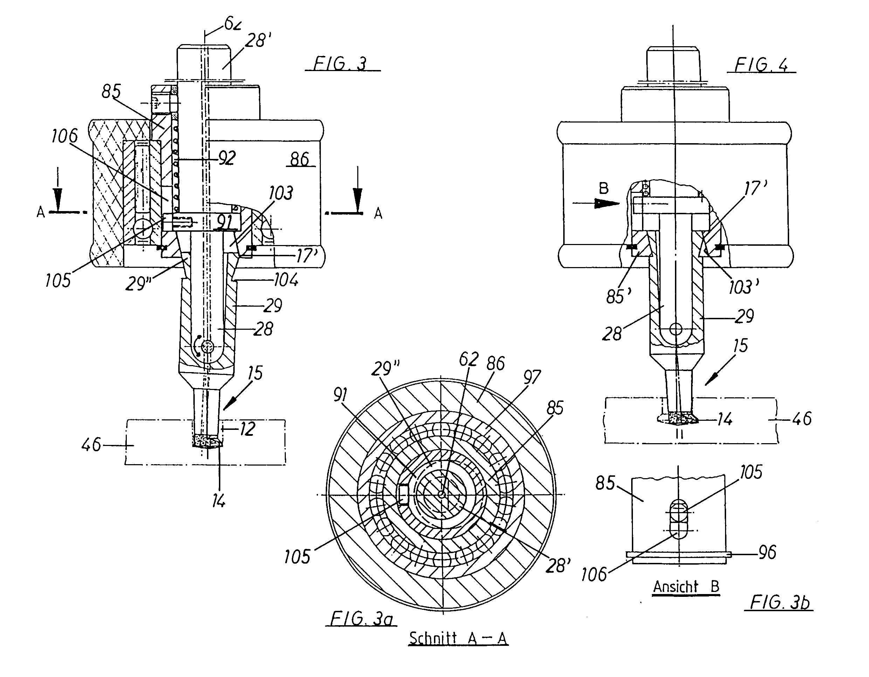

Fig.3 zeigt eine gegenüber der Fig.1 lediglich im Bereich einer Führungsausnehmung 103 abgewandelte Ausnehmungsform. Die Führungsausnehmung 103 ist als mit einem Kreisringquerschnitt versehene Bohrung ausgebildet. Dementsprechend ist das benachbarte Ende 29'' konisch ausgebildet, mit zum Bohrer 15 hin erfolgender Verjüngung. Es ergibt sich die aus der Zeichnung ersichtliche Ringnut 104. Die Schrägfläche 17' zur Erzeugung eines radialen Vortriebs der Seitenschneide 14 ist eine auf die Führungsausnehmung 103 abgestimmte Abschrägung. Infolgedessen können mit dem Druckkörper 85 Radialkräfte auf das Kupplungsstück 29 übertragen werden, so daß dieses in den Richtungen des Doppelpfeils geschwenkt werden kann. Es ist jedoch nicht möglich, mit dem Druckstück 85 Drehantriebskräfte direkt über das Ende 29'' des Kupplungsstücks 29 zu übertragen, da die beteiligten Bauteile rotationssymmetrisch ausgebildet sind. Infolgedessen ist eine besondere verdrehformschlüssige Verbindung zwischen dem Druckstück 85 und dem Kupplungsstück 28 vorhanden, nämlich eine Verbindungsschraube 105, die in den Ringkragen 91 des Kupplungsstücks 28 eingeschraubt ist und mit ihrem Kopf in einen Schlitz 106 des Druckstücks 85 eingreift. Aus Fig.3b ist die Ausgestaltung des Schlitzes 106 als Langloch ersichtlich. Aus Fig.3a ist ersichtlich, daß eine Relativverdrehung ausgeschlossen wird. Diese Figur zeigt gestrichelt die relative exzentrische Lage des Endes 29'' des Kupplungsstücks 29 in Bezug auf die Rotationsachse 62.

Wenn der Druckkörper 85 durch Betätigung über das Griffstück 86 nach unten verstellt wird, nachdem der Bohrer 15 in die Vorbohrung 12 des Werkstücks 46 hineingesteckt wurde, ergibt sich eine im Gegenuhrzeigersinn erfolgende seitliche Verschiebung der Seitenschneide 14, so daß das Ende 85' mit seiner Führungsfläche 103' der Führungsausnehmung 103 auf der Schrägfläche nach unten in Richtung auf das Werkstück 46 gleitet und dabei teilweise in die Ringnut 104 eintaucht, bis die maximale durch den Wandabschnitt 34 bestimmte Verschwenkung des Bohrers 15 erreicht ist. Damit ist das Maß für die maximale Verschwenkung der Seitenschneide 14 vorbestimmt, ebenso wie bei dem vertikal nach unten erfolgenden Verschieben des Druckstücks 85 des Ausführungsbeispiels der Fig.1,2. Auch bei der Bohrvorrichtung der Fig.3,4 wirkt die Druckfeder 92, gegebenenfalls mit manueller Unterstützung, im Sinne einer Verschwenkung des Kupplungsstücks 29 im Uhrzeigersinn, so daß letzteres wieder seine Ausgangslage einnimmt und der Bohrer 15 aus der fertiggestellten Hinterschneidungsbohrung herausgezogen werden kann.

Bei den vorbeschriebenen Ausführungsbeispielen wurde davon ausgegangen, daß das Druckstück 85 manuell beaufschlagt wird. Es ist jedoch auch möglich, eine maschinelle Verstellung des Druckstücks 85 vorzunehmen, beispielsweise pneumatisch.

## Patentansprüche

1. Bohrvorrichtung (90) zum Herstellen von Bohrungen mit Hinterschneidungen (11), mit einem Bohrer (15), dessen Bohrschaft (19) eine über den Bohrschaftumfang (18) radial vorstehende Seitenschneide (14) und auf seinem der Seitenschneide (14) gegenüberliegenden Umfang (18) eine das Einstecken der Seitenschneide (14) in die Bohrung ermöglichende Abflachung aufweist, und dessen Bohrschaft (19) mit einer beim Rotieren des Bohrers (15) taumelnde Schaftbewegungen gestattenden gelenkigen, zwischen dem Bohrer (15) und einem Bohrerantrieb angeordneten Verbindungskupplung (20) fest verbunden ist, die ein bohrantriebsseitiges Kupplungsstück (28) mit einem beim Herstellen der Hinterschneidung axial beweglichen, mit einem Griffstück oder einer maschinellen Verstellung versehenen Druckkörper (85) aufweist, der auf einer einen radialen Vortrieb der Seitenschneide (14) bewirkenden Schrägfläche (17) eines mit dem Bohrschaft (19) verbundenen Kupplungsstücks (29) abstützbar ist, **dadurch gekennzeichnet**, daß das bohrschaftseitige Kupplungsstück (29) in einer axial nicht beaufschlagten Stellung von dem axial beweglichen Druckkörper (85) axial überlappt und damit radial formschlüssig gekuppelt ist, wobei die Schrägfläche als zwei ebene Parallelflächen (17, 101) ausgebildet ist und der axial bewegliche Druckkörper (85) an seinem bohrerseitigen Ende (85') zwei einander etwa parallele ebene Führungsflächen (102) hat, welche die zwei Parallelflächen des bohrschaftseitigen Kupplungsstücks (29) verdrehformschlüssig umfassen.

2. Bohrvorrichtung (90) zum Herstellen von Bohrungen mit Hinterschneidungen (11), mit einem Bohrer (15), dessen Bohrschaft (19) eine über den Bohrschaftumfang (18) radial vorstehende Seitenschneide (14) und auf seinem der Seitenschneide (14) gegenüberliegenden Umfang (18) eine das Einstecken der Seitenschneide (14) in die Bohrung ermöglichende Abflachung aufweist, und dessen Bohrschaft (19) mit einer beim Rotieren des Bohrers (15) taumelnde Schaftbewegungen gestattenden gelenkigen, zwischen dem Bohrer (15) und einem Bohrerantrieb angeordneten Verbindungskupplung (20) fest verbunden ist, die ein bohrantriebsseitiges Kupplungsstück (28) mit einem beim Herstellen der Hinterschneidung axial beweglichen, mit einem Griffstück oder einer maschinellen Verstellung versehenen Druckkörper (85) aufweist, der auf einer einen radialen Vortrieb der Seitenschneide (14) bewirkenden Schrägfläche (17) eines mit dem Bohrschaft (19) verbundenen Kupplungsstücks (29) abstützbar ist, **dadurch gekennzeichnet**, daß das bohrschaftseitige Kupplungsstück (29) in einer axial nicht beaufschlagten Stellung von dem axial beweglichen Druckkörper (85) axial überlappt und damit radial formschlüssig gekuppelt ist, wobei der axial bewegliche Druckkörper (85) eine kreiszylindrische, gegenüber der Längsachse der Vorrichtung geneigte Führungsausnehmung (103) hat und das bohrschaftseitige Kupplungsstück (29) ein zum Bohrer (15) hin konisch verjüngtes Ende (29'') mit einer der kreiszylindrischen Führungsausnehmung (103) des Druckkörpers (85) angepaßten Schrägfläche (17') für den radialen Vortrieb aufweist und der Druckkörper (85) mit dem bohrantriebsseitigen Kupplungsstück (28) verdrehformschlüssig verbunden ist.

3. Vorrichtung nach Anspruch 1, **dadurch gekennzeichnet**, daß die Kupplungsstücke (28,29) über eine Querachse (32) miteinander verbunden sind, und daß der Druckkörper (85) das bohrschaftseitige Kupplungsstück (29) auf Höhe der Schrägfläche (17,17') mit einer Führungsausnehmung (100, 103) formschlüssig umfaßt.

## Claims

1. Drilling device (90) for the production of bores with undercuts (11), comprising a drill (15) whose drill shaft (19) has a side cutter (14) projecting radially beyond the periphery (18) of the drill shaft, and, on its periphery (18) lying opposite the side cutter (14), has a flat zone which makes possible the insertion of the side cutter (14) into the bore, and whose drill shaft (19) is fixedly connected to an articulated connector coupling (20) arranged between the drill (15) and a drill drive and which permits wobbling shaft movements upon the rotation of the drill (15), wherein the connector coupling comprises a drill drive-side coupling member (28) with a pressure member (85) which is axially movable for the production of the undercut and which is provided with a grip member or a mechanical adjustment, wherein the pressure member is seated on an inclined surface (17) of a coupling member (29) connected to the drill shaft (19), said inclined surface effecting a radial advance of the side cutter (14), characterised in that the drill shaft-side coupling member (29) in an axially inactive position is axially overlapped by the axially movable pressure member (85) and consequently is radially coupled thereto in a shape-locking manner, wherein the inclined surface is constituted by two plane parallel surfaces (17, 101) and the axially movable pressure member (85) at its drill side end (85') has two substantially parallel plane guide surfaces (102) which embrace the two parallel surfaces of the drill shaft-side coupling member (29) in a rotational shape-locking manner.

2. Drilling device (90) for the production of bores with undercuts (11), comprising a drill (15) whose drill shaft (19) has a side cutter (14) projecting radially beyond the periphery (18) of the drill shaft, and, on its periphery (18) lying opposite the side cutter (14), has a flat zone which makes possible the insertion of the side cutter (14) into the bore, and whose drill shaft (19) is fixedly connected to an articulated connector coupling (20) arranged between the drill (15) and a drill drive and which permits wobbling shaft movements upon the rotation of the drill (15), wherein the connector coupling comprises a drill drive-side coupling member (28) with a pressure member (85) which is axially movable for the production of the undercut and which is provided with a grip member or a mechanical adjustment, wherein the pressure member is seated on an inclined surface (17) of a coupling member (29) connected to the drill shaft (19), said inclined surface effecting a radial advance of the side cutter (14), characterised in that the drill shaft-side coupling member (29) in an axially inactive position is axially overlapped by the axially movable pressure member (85) and consequently is radially coupled thereto in a shape-locking manner, wherein the axially movable pressure member (85) has a circular cylindrical guide recess (103) which is inclined to the longitudinal axis of the device and the drill shaft-side coupling member (29) has a tapering end (29'') narrowing towards the drill (15) with an inclined surface (17') for the radial advance adapted to the circular cylindrical guide recess (103) of the pressure member (85), and the pressure member (85) is connected to the drill drive-side coupling member (28) in a rotational shape-locking manner.

3. Device according to claim 1, characterised in that the coupling members (28, 29) are connected to each other by means of a transverse shaft (32), and the pressure member (85) embraces the drill shaft-side coupling member (29) at the level of the inclined surfaces (17, 17') with a guide recess (100,103) in a shape-locking manner.

## Revendications

1. Dispositif de perçage (90) pour la réalisation de perçages à contre-dépouilles (11), comprenant un foret (15) dont la tige de perçage (19) comporte une lame latérale (14) faisant saillie radialement de la circonférence (18) de la tige de perçage et, sur sa circonférence (18) opposée à la lame latérale (14), une partie aplatie permettant l'engagement de ladite lame (14) dans le perçage, et dont la tige de perçage (19) est reliée fermement à un accouplement de liaison articulé (20) qui permet des mouvements oscillants de la tige lors de la rotation du foret (15), qui est disposé entre le foret (15) et un entraînement de foret, et qui comporte un élément d'accouplement (28) situé côté entraînement de foret et présentant un corps de pression (85) mobile axialement lors de la réalisation de la contre-dépouille et pourvu d'une poignée ou d'un réglage par machine, lequel corps de pression (85) est apte à s'appuyer sur une surface inclinée (17), qui provoque une avance radiale de la lame latérale (14), d'un élément d'accouplement (29) relié à la tige de perçage (19), caractérisé en ce que l'élément d'accouplement (29) prévu côté tige de perçage, dans une position non sollicitée axialement, est couvert axialement par le corps de pression (85) mobile axialement, et accouplé à celui-ci radialement par complémentarité de forme, étant précisé que la surface inclinée est conçue sous la forme de deux surfaces parallèles planes (17, 101) et que le corps de pression (85) mobile axialement a, à son extrémité (85') située côté foret, deux surfaces de guidage planes (102) approximativement parallèles qui entourent les deux surfaces parallèles de l'élément d'accouplement (29) prévu côté tige de perçage par complémentarité de forme en torsion.

2. Dispositif de perçage (90) pour la réalisation de perçages à contre-dépouilles (11), comprenant un foret (15) dont la tige de perçage (19) comporte une lame latérale (14) faisant saillie radialement de la circonférence (18) de la tige de perçage et, sur sa circonférence (18) opposée à la lame latérale (14), une partie aplatie permettant l'engagement de ladite lame (14) dans le perçage, et dont la tige de perçage (19) est reliée fermement à un accouplement de liaison articulé (20) qui permet des mouvements oscillants de la tige lors de la rotation du foret (15), qui est disposé entre le foret (15) et un entraînement de foret, et qui comporte un élément d'accouplement (28) situé côté entraînement de foret et présentant un corps de pression (85) mobile axialement lors de la réalisation de la contre-dépouille et pourvu d'une poignée ou d'un réglage par machine, lequel corps de pression (85) est apte à s'appuyer sur une surface inclinée (17), qui provoque une avance radiale de la lame latérale (14), d'un élément d'accouplement (29) relié à la tige de perçage (19), caractérisé en ce que l'élément d'accouplement (29) prévu côté tige de perçage, dans une position non sollicitée axialement, est couvert axialement par le corps de pression (85) mobile axialement, et accouplé à celui-ci radialement par complémentarité de forme, étant précisé que le corps de pression (85) mobile axialement présente une cavité de guidage cylindrique circulaire (103) inclinée par rapport à l'axe longitudinal du dispositif, que l'élément d'accouplement (29) situé côté tige de perçage comporte une extrémité (29'') s'effilant en cône vers le foret (15) et pourvue d'une surface inclinée (17') qui est adaptée à la cavité de guidage cylindrique circulaire (103) du corps de pression (85), pour l'avance radiale, et que le corps de pression (85) est relié par complémentarité de forme en torsion à l'élément d'accouplement (28) situé côté entraînement de perçage.

3. Dispositif selon la revendication 1, caractérisé en ce que les éléments d'accouplement (28, 29) sont reliés entre eux par un axe transversal (32), et en ce que le corps de pression (85) entoure par complémentarité de forme l'élément d'accouplement (29) situé côté tige de perçage à la hauteur de la surface inclinée (17, 17') pourvue d'une cavité de guidage (100, 103).
